(19) Europäisches Patentamt
European Patent Office
Office européen des brevets

(11) EP 1 598 317 A1

(12) EUROPEAN PATENT APPLICATION
published in accordance with Art. 158(3) EPC

(43) Date of publication:
**23.11.2005 Bulletin 2005/47**

(21) Application number: **04713663.5**

(22) Date of filing: **23.02.2004**

(51) Int Cl.[7]: **C02F 1/461**, C02F 1/467

(86) International application number:
**PCT/JP2004/002083**

(87) International publication number:
**WO 2004/076363 (10.09.2004 Gazette 2004/37)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.02.2003 JP 2003046903**

(71) Applicant: **MIKUNI CORPORATION**
**Chiyoda-ku, Tokyo 101-0021 (JP)**

(72) Inventor: **HANAOKA, Kokichi**
**Ueda-shi, Nagano 386-0001 (JP)**

(74) Representative: **Ziebig, Marlene**
**Anwaltskanzlei**
**Gulde Hengelhaupt Ziebig & Schneider**
**Wallstrasse 58/59**
**10179 Berlin (DE)**

# (54) METHOD FOR PRODUCING MIXED ELECTROLYZED WATER

(57) This invention discloses a process for preparing a mixed electrolyzed water consisting of a cathodic and an anodic electrolyzed waters comprising the step of electrolyzing an aqueous solution of an organic electrolyte containing a water-soluble inorganic salt in less than 0.1 mM and an organic electrolyte in 1 to 50 mM which is fed into a non-diaphragm electrolytic bath comprising at least a pair of inactive electrodes separated from each other by an inter-electrode distance of 2 mm or less, wherein the aqueous solution of an organic electrolyte with pH equal to that of the mixed electrolyzed water prepared by electrolysis is neutralized with a titration volume less than that for the raw aqueous solution in neutralization titration with an aqueous solution of sodium hydroxide or has a higher dismutation activity to superoxide radical per mole than the raw aqueous solution.

Fig. 1

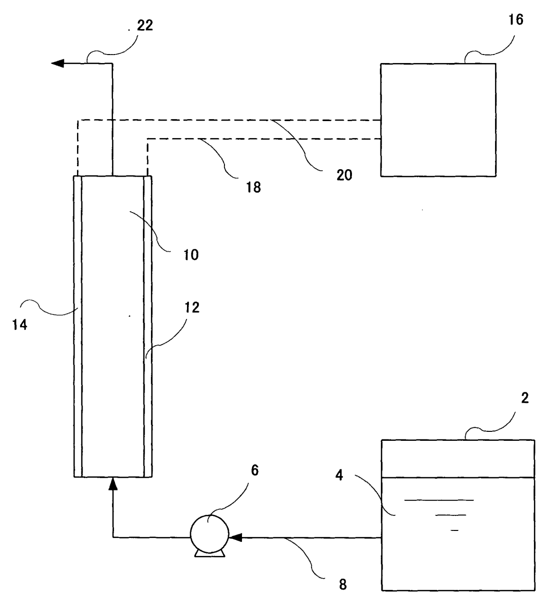




Printed by Jouve, 75001 PARIS (FR)

## Description

TECHNICAL FIELD

This invention relates to a process for preparing a mixed electrolyzed water consisting of an anodic and a cathodic electrolyzed waters, which is capable of dismutating superoxide radical. In particular, this invention relates to a process for preparing a mixed electrolyzed water capable of dismutating superoxide radical, comprising electrolyzing an aqueous organic electrolyte solution containing virtually only an organic water-soluble electrolyte such a ascorbic acid as an electrolyte.

BACKGROUND OF THE INVENTION

It has been well-known that using an electrolytic bath within which inactive electrodes made of platinum or a platinum alloy are placed via a diaphragm, aqueous dilute electrolyte solution of an alkali-metal chloride is electrolyzed, followed by removing an anodic electrolyzed water (acidic water) with a lower pH generated in the anodic side, which can be utilized for sterilization or disinfection. Examples of a diaphragm used include a charged membrane which is an ion-exchange resin film and a non-charged membrane having a microporous structure.

In an anodic electrolyzed water, hypochlorous acid is generated. Thus, because of strong oxidizing and chlorinating action of hypochlorous acid, an anodic electrolyzed water is used for sterilization or disinfection. Such utilization is prevalent in medical institutions and so on. Further, since small amounts of ozone and dissolved oxygen present in the acidic water promotes granulation, it has been studied as an aid for surgical treatment.

Meanwhile, a cathodic electrolyzed water (alkaline water) in the cathodic side can be generated by electrolyzing tap water in place of a dilute electrolytic solution, and has been used for drinking. It has been also reported that to the aqueous electrolytic solution, an organic acid such as ascorbic acid and gallic acid is added, not as an electrolytic aid, but as an additive.

In this technique, ascorbic acid is used in the presence of an electrolytic aid. Ascorbic acid is added for controlling pH of a cathodic electrolyzed water and for removing free chlorine in an anodic electrolyzed water.

Ascorbic acid has OH groups at 2- and 3-positions. In an acidic range, the OH at 3-position is dissociated into $-O^-$ and $H^+$, having acidity. In an alkaline range, although the OH at 2-position is dissociated into $-O^-$ and $H^+$, its dissociation ratio is too low to allow ascorbic acid to be used as an electrolytic aid. An electrolysis mechanism for an aqueous solution of ascorbic acid is so complicated that intermediates have not been identified, but the mechanism is observed a redox reaction in principle.

Ascorbic acid is a strong reducing agent by itself. It is, however, well-known that ascorbic acid undergoes autoxidation in an aqueous solution, leading to deteriorated reducing power.

Ascorbic acid generally undergoes autoxidation in the following manner.

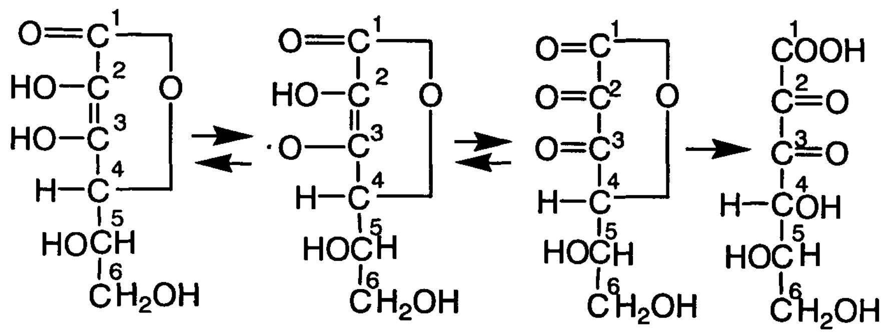

AsA MDA DHA DKG

(1)

wherein AsA, MDA, DHA and DKG represent ascorbic acid, monodehydroascorbic acid, dehydroascorbic acid and 2,3-diketogulonic acid, respectively.

It has been recently demonstrated that ascorbic acid can dismutate and eliminate superoxide radical which

is generally known as "active oxygen". Therefore, ascorbic acid has drawn attention as an antioxidant.

Dismutation is a reaction where superoxide radical is decomposed and hydrogen peroxide generates as shown in equation (2):

$$O^{-}_{2}\cdot + O^{-}_{2}\cdot + 2H^{+} \rightarrow H_2O_2 + O_2 \qquad (2)$$

As described above, ascorbic acid is a useful compound for eliminating superoxide radical.

We have focused on dismutating effect of ascorbic acid on superoxide radical and have intensely studied to obtain an anodic electrolyzed water having the above ability. We have consequently found that an anodic electrolyzed water having ability of dismutating superoxide radical can be obtained by electrolyzing an aqueous solution containing only ascorbic acid in a relatively low concentration without using any inorganic electrolyte such as a water-soluble metal salt as an electrolytic aid. We have thus filed a patent application on a process for preparing an anodic electrolyzed water having improved ability to dismutate superoxide radical (Japanese Patent Application No. 20010-172538, Claim 1).

SUMMARY OF THE INVENTION

In the above process for preparing an anodic electrolyzed water having improved ability to dismutate superoxide radical, a cathodic electrolyzed water is discarded without being effectively utilized because it has been believed that $OH^-$ ion present in a cathodic electrolyzed water would react with dissociated ascorbate ion ($AsA^-$) to oxidize ascorbic acid, as shown in equation (3):

$$AsA^{-} + OH^{-} \rightarrow AsAO + H_2 \qquad (3)$$

We have intensely attempted to solve the above problem, and have finally found that when mixing an anodic electrolyzed water with a cathodic electrolyzed water, oxygen generated in an anode side and hydrogen generated in a cathode side quickly react to form water so that oxidation of ascorbic acid actually fails to occur. Furthermore, it has been found that these electrolyzed waters can be effectively mixed by selecting a inter-electrode distance not more than a certain value; that thus a mixed electrolyzed water having improved ability of dismutating superoxide radical can be effectively prepared; and further that there is no need to discharge a cathodic electrolyzed water as waste.

Based on the above findings, this invention has been achieved. An objective of this invention is to provide a process for preparing a mixed electrolyzed water having improved ability to dismutate superoxide radical.

Since a raw electrolysis water comprising an organic electrolyte as an electrolysis aid is electrolyzed and resulting an anodic and a cathodic electrolyzed waters are mixed in this invention, the mixed electrolyzed water thus obtained has a lower DO and improved ability to dismutate superoxide radical. The mixed electrolyzed water can be, therefore, conveniently used in a variety of applications such as sterilization, disinfection, granulation, health maintenance and cosmetic applications. Furthermore, since an anodic and a cathodic electrolyzed waters are prepared as a mixture in this preparation process, it requires a simpler manufacturing apparatus in comparison with a conventional process where an electrolyzed water in one electrode side is taken out. Additionally, since as an organic electrolyte, this invention employs a vitamin, ascorbic acid whose safety to a human body has been established, the cathodic electrolyzed water prepared using the vitamin as an electrolysis aid is also quite safe.

This invention will be described below.

[1] A process for preparing a mixed electrolyzed water consisting of a cathodic and an anodic electrolyzed waters comprising the step of electrolyzing an aqueous solution of an organic electrolyte containing a water-soluble inorganic salt in less than 0.1 mM and an organic electrolyte in 1 to 50 mM which is fed into a non-diaphragm electrolytic bath comprising at least a pair of inactive electrodes separated from each other by an inter-electrode distance of 2 mm or less, wherein the aqueous solution of an organic electrolyte with pH equal to that of the mixed electrolyzed water prepared by electrolysis is neutralized with a titration volume less than that for' the raw aqueous solution in neutralization titration with an aqueous solution of sodium hydroxide or has a higher dismutating activity to superoxide radical per mole than the raw aqueous solution.

[2] The process for preparing a mixed electrolyzed water as described in [1], wherein a polarity of electric power supplied between both electrodes at least one irreversible electrodes is alternated at least twice per minute.

[3] The process for preparing a mixed electrolyzed water as described in [1], wherein the organic electrolyte is selected from the group consisting of ascorbic acid and its water-soluble derivatives, water-soluble flavonoids,

water-soluble polyphenols including water-soluble catechins and a water-soluble extract from herbs.

Generally, on being dissolved in water, an inorganic electrolyte such as sodium chloride, potassium chloride, calcium chloride and sodium sulfate is ionized, i. e., completely dissociated into a cation and an anion. Specific properties of water as a solvent is responsible to dissociation of these salts. Water dissolves and ionizes an electrolyte, i. e., a substance comprised of electrically positive and negative elements, and loosens association between molecules comprised of a positive and a negative elements. Once a solid electrolyte with limited freedom is dissolved in water, its freedom is so increased that the electrolyte can be attached to or detached from a variety of chemical species.
Some of electrolytes inherently has lower freedom. Such an electrolyte may not be, although being dissolved to some degree, completely dissolved in water and some part of the electrolyte remains insoluble. Examples of a measure of freedom in an aqueous solution include a dissociation constant, a dissociation index and an electrolytic dissociation constant.
A dissociation constant is defined as below. For example, when an electrolyte AB is dissociated or ionized into $A^+$ and $B^-$ in water as shown in equation (3), a relationship shown in equation (4) holds true:

$$AB \Leftrightarrow A^+ + B^- \tag{3}$$

$$[A^+]\,[B^-]/\,[AB] = Ka \tag{4}$$

wherein $[A^+]$, $[B^-]$ and $[AB]$ represent concentrations of the corresponding entities.
A dissociation ratio herein is called a dissociation constant, Ka, provided that in terms of conditions, a temperature and a pressure must be constant; specifically 25 °C and 1 atm, respectively, in a standard condition.
Thus, a dissociation constant of a water-soluble electrolyte indicates a degree of its dissociation.
In electrolysis of a dilute aqueous electrolytic solution such as a brine, water itself is oxidized and reduced in an anode and a cathode, respectively, to generate oxygen and hydrogen as shown in equations (5) and (6).

$$2H_2O \Leftrightarrow 4H^+ + O_2 + 4e^- \qquad \text{(anode)} \tag{5}$$

$$2H_2O + 2e^- \Leftrightarrow 2OH^- + H_2 \qquad \text{(cathode)} \tag{6}$$

This reaction proceeds in a strong electric-field layer in the electrode surface, so that the reaction is initiated by an extremely minute electric energy.
Furthermore, in electrolysis of a dilute aqueous electrolytic solution, water itself is electrolyzed while its dissociation is accelerated.
One liter of water contains 55.55 moles ($6\times10^{23}$) of molecules, but they are ionized into positive and negative ions according to equation (7) in an extremely small ratio.

$$2H_2O \Leftrightarrow H_3O^+ + OH^- \qquad (pKw = 14) \tag{7}$$

As indicated in this equation, only $10^{-7}$ mols are ionized in one liter neutral water.
However, electrolysis can accelerate ionization to increase the numbers of positive and negative ions (See, J. Appl. Electrochem. 31 (2001), 1307-1313).
When applying an electric field such that a direct current flows through an aqueous solution of an organic electrolyte with a relatively lower ionization degree, substances having positive charge and having negative charge move toward a cathode and an anode, respectively. Then, they are involved in giving and receiving electrons in the surfaces, to give corresponding electrode-reaction products.
Simultaneously, water itself is oxidized in the anode while being reduced in the cathode, and the resulting products react with the ionized organic electrolyte to give new products. In particular, in the course of oxidation and reduction of water, dissociation of water proceeds, resulting in a minor increase in a water ion product. Furthermore, the ionized organic electrolyte is also dissociated to a minor degree to reduce a dissociation index.
Relative dissociation rates may be compared by neutralization titration of the raw aqueous solution before electrolysis and the resulting solution after electrolysis with an acid or base, followed by determination of a difference

between the titration volumes. A smaller titration volume indicates a larger dissociation in an aqueous solution.

The above principle will be more specifically described using L-ascorbic acid (AsA) as an organic electrolyte.

AsA is dissociated in two dissociation sites as shown in formula (8).

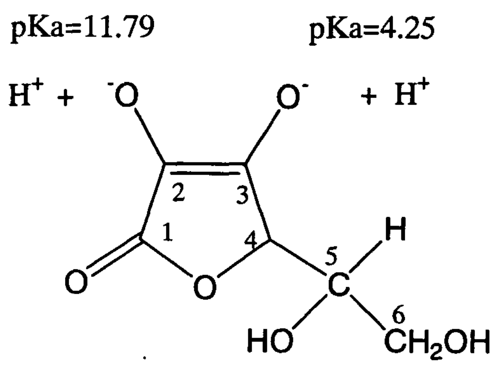

(8)

In AsA, reactive sites are essentially OH groups attached at 2- and 3-positions, which are dissociated into $H^+$ and $-O^-$. For example, dissociation for the OH group at 3-position is expressed as pKa = 4.25. A dissociation index of 4.25 indicates that the OH group is dissociated into a positive and a negative ions in an extremely small amount of $(1/2)\times 10^{-4.25}$ M ($2.8117\times 10^{-5}$ M) in an aqueous solution up to one liter at 1 atm and 25 °C.

When dissolving a low-dissociating substance such as AsA in a cathodic electrolyzed water prepared by electrolysis of a dilute aqueous electrolyte solution such as a brine, the dissociation is accelerated. As a result, it has been found that a dismutation activity (SOD activity) for superoxide radical is increased in comparison with an aqueous solution of As A with an equal pH. Specifically, dissociation of the OH group at 2-position of AsA shown in formula (8) is accelerated so that the group becomes more reactive to a radical or active oxygen. The OH group at 3-position is consumed in neutralization of the alkaline electrolyzed water. The OH, therefore, exhibits lower SOD activity and does not act as a scavenger to superoxide radical. Thus, a low-dissociating water-soluble substance can be dissolved in an electrolyzed water with improved dissociating ability, to improve dissociation of the substance, resulting in making the low-dissociating water-soluble substance more reactive.

As shown in formula (8), ascorbic acid has dissociable groups (-OH group) at 2- and 3-positions, which have dissociation indices, pKa, of 11.79 and 4.25, respectively, at 25 °C and 1 atm. In an aqueous solution, the OH group at 3-position in ascorbic acid is dissociated into $-O^-$ and $H^+$, exhibiting acidity. A mixed electrolyzed water consisting of a cathodic and an anodic electrolyzed waters prepared by electrolysis of a dilute aqueous solution of ascorbic acid contains no electrolyte ions other than ascorbate ions. The OH group at 3-position is, therefore, not used in neutralization of an alkali generated in the cathode, maintaining its reducibility.

When an anode and a cathode are closely disposed to each other and these electrodes are not separated by a diaphragm, an anodic and a cathodic electrolyzed waters may be easily mixed. As a result, dissolved oxygen generated by anodic oxidation of water reacts with dissolved hydrogen generated by cathodic reduction of water, to give water. In addition, polarity of an electrolysis voltage can be alternated to further accelerate mixing of the anodic and the cathodic electrolyzed waters. Consequently, a concentration of dissolved oxygen generated by oxidation of water in the anode becomes 1 mg/L or less because the dissolved oxygen is consumed by AsA and reducing dissolved hydrogen.

As described above, a dissociation ratio can be compared by a neutralization volume for a substance such as AsA which exhibits acidity by a 2, 3-ene diol, while the dissociation ratio can be compared by determining dismutating ability for superoxide radical to a substance which does not exhibit acidity or basicity.

Generally, water-soluble polyphenols, water-soluble flavonoids and catechins exhibit dismutating ability to superoxide radical. As in AsA, proton from an OH group attached to a carbon atom having a double bond exhibits dismutating ability. For example, in quercetine, a flavonoid, a proton from the OH group exhibits antioxidation ability as shown in equation (9).

$$O_2^{-}\cdot + 2H^{+} \rightarrow H_2O_2 \quad (9)$$

These water-soluble antioxidants release free proton to dismutate superoxide radical. As described above,

proton dissociation is accelerated by electrolysis, resulting in increased dismutating ability per mol. It is, therefore, possible to estimate a dissolution degree by comparing dismutating ability.

As flavonoids, quercetine and catechin are shown in formulas (10) and (11).

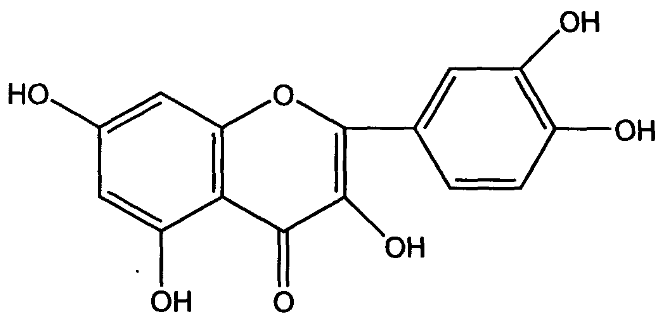

(10)

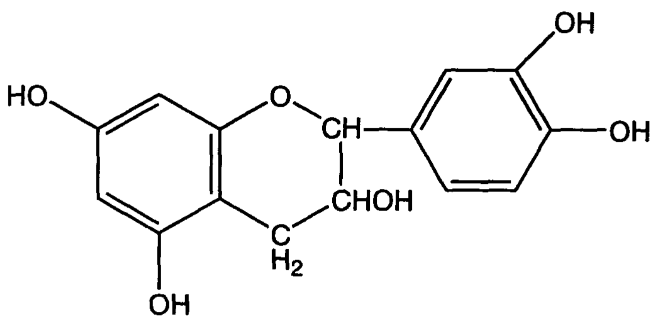

(11)

## BRIEF DESCRIPTION OF THE DRAWINGS

FIG. 1 schematically shows a configuration of an apparatus for preparing a mixed electrolyzed water used in a process for preparing a mixed electrolyzed water of this invention. FIG. 2 schematically shows another configuration of an apparatus for preparing a mixed electrolyzed water used in a process for preparing a mixed electrolyzed water of this invention. FIG. 3 is a graph showing relationship between an electrolysis time for a mixed electrolyzed water in Example 1 and a neutralization volume of a 0.1 N aqueous solution of NaOH. FIG. 4 is a graph showing a relationship between an electrolysis time for a mixed electrolyzed water prepared by electrolyzing an aqueous solution of an organic electrolyte and a dismutating ability to superoxide radical.

In these drawings, the symbols have the following meanings; 2: raw electrolysis water reservoir; 4: aqueous solution of an organic electrolyte; 6: pump; 8: feeding line for an aqueous solution of an organic electrolyte; 10:

non-diaphragm electrolytic bath; 12, 14: electrode; 16:

power source for electrolysis; 18,20: interconnections; 22: drain line for a mixed electrolyzed water; 30:

non-diaphragm electrolytic bath; 32,34: electrode; 36:

power source for electrolysis; 38: aqueous solution of an organic electrolyte.

## DETAILED DESCRIPTION OF THE INVENTION

In this invention, an aqueous solution of an organic electrolyte comprising substantially exclusively the organic electrolyte is electrolyzed to give a mixed electrolyzed water consisting of the resulting anodic and cathodic electrolyzed waters. The mixed electrolyzed water has an increased dissociation ratio of the organic electrolyte and improved ability

to dismutate superoxide radical, and can be thus used in a variety of applications such as skin care.

FIG. 1 schematically shows a configuration of an electrolysis apparatus used in a process for preparing a mixed electrolyzed water of this invention. In this figure, 2 denotes a raw electrolysis water reservoir, which is filled with an aqueous solution of an organic electrolyte (raw electrolysis water) 4.

The aqueous solution of an organic electrolyte 4 contains 1 to 50 mM, preferably 2 to 20 mM of the organic electrolyte. When a concentration of the organic electrolyte is less than 1 mM, an electric conductivity is too low to conduct electrolysis. If a concentration of the organic electrolyte is more than 50 mM, the mixed electrolyzed water obtained feels sticky, for example, when being applied to the skin for care, and may be inconvenient for some applications.

Examples of an organic electrolyte include ascorbic acid and its water-soluble derivatives, water-soluble flavonoids, water-soluble polyphenols including water-soluble catechins, and water-soluble extract from herbs.

The aqueous solution of the organic electrolyte 4 substantially contains, besides the organic electrolyte, no electrolytes such as water-soluble inorganic salts. A content of the water-soluble inorganic electrolytes is preferably up to 0.1 mM, particularly preferably up to 0.02 mM as the total of these water-soluble inorganic electrolytes. A concentration of the inorganic electrolytes is much lower than that of inorganic electrolytes in common well water, tap water or the like.

Such an aqueous solution of an organic electrolyte 4 can be prepared, for example, by dissolving an organic electrolyte such as ascorbic acid in purified water (pure water) such as distilled water and deionized water within the above concentration range.

In this figure, 6 is a pump intervening a feeding line 8 through which an aqueous solution of an organic electrolyte is fed. By actuating this pump 6, the aqueous solution of an organic electrolyte 4 is fed to a non-diaphragm electrolytic bath 10 via the feeding line 8.

Inside of the non-diaphragm electrolytic bath 10, there are placed a pair of mutually facing electrodes 12, 14 which are separated from each other by a certain distance. A distance between the paired electrodes 12, 14 is no more than 2 mm, preferably 1.5 to 0.05 mm, more preferably 1.0 to 0.1 mm. If the inter-electrode distance is more than 2 mm, an anodic and a cathodic electrolyzed waters generated by electrolysis cannot be adequately mixed, leading to inadequate increase in a dissociation ratio of hydroxyl group of the organic electrolyte in the resulting mixed electrolyzed water or inadequate dismutation of superoxide radical.

Furthermore, a diaphragm between the electrodes 12, 14 in the electrolytic bath 10 is undesirable because it causes inadequate mixing of the anodic and the cathodic electrolyzed waters generated by electrolysis.

The electrodes 12, 14 are made of an electrochemically inactive metal material. Preferable electrode materials include platinum and platinum alloys. Although a pair of electrodes has been used in the above description, multiple pairs of electrodes may be, without limitations, placed in an electrolytic bath for improving an electrolysis efficiency.

In the figure, 16 is a power source for electrolysis, whose plus and minus terminals are connected to the above electrodes 12 and 14 via interconnections 18 and 20, respectively. Polarity of an electric power applied to each of the electrodes may be constant or alternated at an appropriate time interval. Alternation of polarity of an applied power at a certain time interval is particularly preferable because a cathodic and an anodic electrolyzed waters are alternately generated in one electrode, resulting in effective mixing of the anodic and the cathodic electrolyzed waters. An interval of polarity alternation is preferably 2 to 60 times /min.

The aqueous solution of an organic electrolyte 4 passes through the feeding line for an aqueous solution of an organic electrolyte 8 and is fed into the non-diaphragm electrolytic bath 10, in which the solution is then subjected to electrolysis. An electrolysis current density is preferably 0.003 to 0.03 A/$cm^2$, particularly preferably 0.01 to 0.02 A/$cm^2$. An electrolysis current density of less than 0.003 A/$cm^2$ may lead to inadequate increase in a dissociation ratio of hydroxyl group in the organic electrolyte in the resulting mixed electrolyzed water or inadequate dismutation for superoxide radical. On the other hand, an electrolysis current density of more than 0.03 A/$cm^2$ may be uneconomical because a dissociation ratio of hydroxyl group in the organic electrolyte in the mixed electrolyzed water is not increased or dismutation for superoxide radical is not increased in proportion to the higher current value.

Therefore, an electrolysis current density can be controlled within the above range to obtain an at least 1.25-fold dissociation ratio of hydroxyl group in the mixed electrolyzed water discharged from the electrolytic bath in comparison with that before electrolysis and an at least 1.2-fold dismutation for superoxide radical in comparison with that before electrolysis.

Electrolysis as described above results in spontaneous mixing of an anodic and cathodic electrolyzed waters generated in an electrolytic bath during electrolysis. The mixed electrolyzed water as a mixture of both electrolyzed waters is continuously drained through a drain line for a mixed electrolyzed water 22.

Presence of ability to dismutating superoxide radical may be determined by observing a superoxide radical signal in ESR described later.

FIG. 2 shows another embodiment of an electrolysis apparatus. In this embodiment, an aqueous solution of an organic electrolyte is not continuously fed to an electrolytic bath. In FIG. 2, 30 is a non-diaphragm electrolytic bath,

in which there are placed a pair of mutually facing electrodes 32, 34 in parallel. In this figure, 36 is a power source for electrolysis, which supplies electrolysis power to the electrodes 32, 34. The electrolytic bath is filled with an aqueous solution of an organic electrolyte 38. Electric power is supplied from the power source for electrolysis 36 to these electrodes 32, 34, to initiate electrolysis of the aqueous solution of an organic electrolyte 38. Details of the configuration is as described above, and thus are not described herein.

## EXAMPLES

This invention will be more specifically described with reference to examples.

### Example 1

A raw electrolysis water containing ascorbic acid (AsA) was electrolyzed using an electrolysis apparatus shown in FIG. 2.

In an electrolytic bath was placed a pair of electrodes which are a 10 × 10 cm titanium plate coated with platinum. An inter-electrode distance was 2 mm. The electrolytic bath was a rectangular solid with a size of 11 cm (length) × 5 cm (width) × 12 cm (height). A 30 mM aqueous solution of AsA was prepared and 600 mL of the solution was charged in the electrolytic bath. While stirring the aqueous AsA solution, a current of 0.25 A was applied to the electrodes to conduct electrolysis. Electrolysis was conducted while alternating polarity at an interval of 30 sec after the initiation of electrolysis. Table 1 shows pH, a oxidation-reduction potential (ORP), a dissolved oxygen content (DO) and an electrical conductivity (EC) of the mixed electrolyzed water generated by electrolysis. Mixed electrolyzed water generated at various electrolysis times were netralization-titrated with a 0.1N NaOH solution and the titration amounts were compared. The results are shown in FIG. 3. Furthermore, FIG. 4 shows the results of superoxide-radical dismutating ability of AsA, a water-soluble flavonoid and a water-soluble catechin, which were measured by an electron spin resonance spectroscope. The conditions in signal measurement using the electron spin resonance spectroscope are as follows:

Measurement temperature: an ambient temperature;
Microwave output: 3.7 m W;
Sweeping field: 339.1 mT ± 5.5 mT;
Field modulation: 100 kHz (external modulation mode);
Modulation width: 0.1 mT;
Time constant: 0.12 sec;
Sweeping time: 1 min.

Table 1

| Electrolysis time (sec) | 0 | 30 | 90 |
|---|---|---|---|
| PH | 3.01 | 3.02 | 3.02 |
| ORP (mV) | 148 | 109 | 80 |
| DO (mg/L) | 6.62 | 0.5 | 0.01 |
| EC (mS/m) | 46.5 | 46.4 | 46.3 |

As seen from Table 1, along with elapse of an electrolysis time, an ORP was reduced, i. e., it moved toward a reducing side. Furthermore, a DO was reduced, indicating that an anodic and a cathodic electrolyzed waters were effectively mixed, resulting in a reduced DO. In addition, an EC did not vary very much, indicating that the number of electrolyte ions little varied.

FIG. 3 demonstrates that along with elapse of an electrolysis time, a titration volume was reduced, indicating that a dissociation ratio of the mixed electrolyzed water generated by electrolysis was increased. Furthermore, table 1 shows that pH of the mixed electrolyzed water was little varied.

FIG. 4 indicates that along with elapse of an electrolysis time, ability to dismutate superoxide radical was increased.

## Claims

1. A process for preparing a mixed electrolyzed water consisting of a cathodic and an anodic electrolyzed waters comprising the step of electrolyzing an aqueous solution of an organic electrolyte containing a water-soluble inorganic salt in less than 0.1 mM and an organic electrolyte in 1 to 50 mM which is fed into a non-diaphragm electrolytic bath comprising at least a pair of inactive electrodes separated from each other by an inter-electrode distance of 2 mm or less, wherein the aqueous solution of an organic electrolyte with pH equal to that of the mixed electrolyzed water prepared by electrolysis is neutralized with a titration volume less than that for the raw aqueous solution in neutralization titration with an aqueous solution of sodium hydroxide or has a higher dismutation activity to superoxide radical per mole than the raw aqueous solution.

2. The process for preparing a mixed electrolyzed water as claimed in Claim 1, wherein a polarity of electric power supplied between both electrodes at least one irreversible electrodes is alternated at least twice per minute.

3. The process for preparing a mixed electrolyzed water as claimed in Claim 1, wherein the organic electrolyte is selected from the group consisting of ascorbic acid and its water-soluble derivatives, water-soluble flavonoids, water-soluble polyphenols including water-soluble catechins and a water-soluble extract from herbs.

Fig. 1

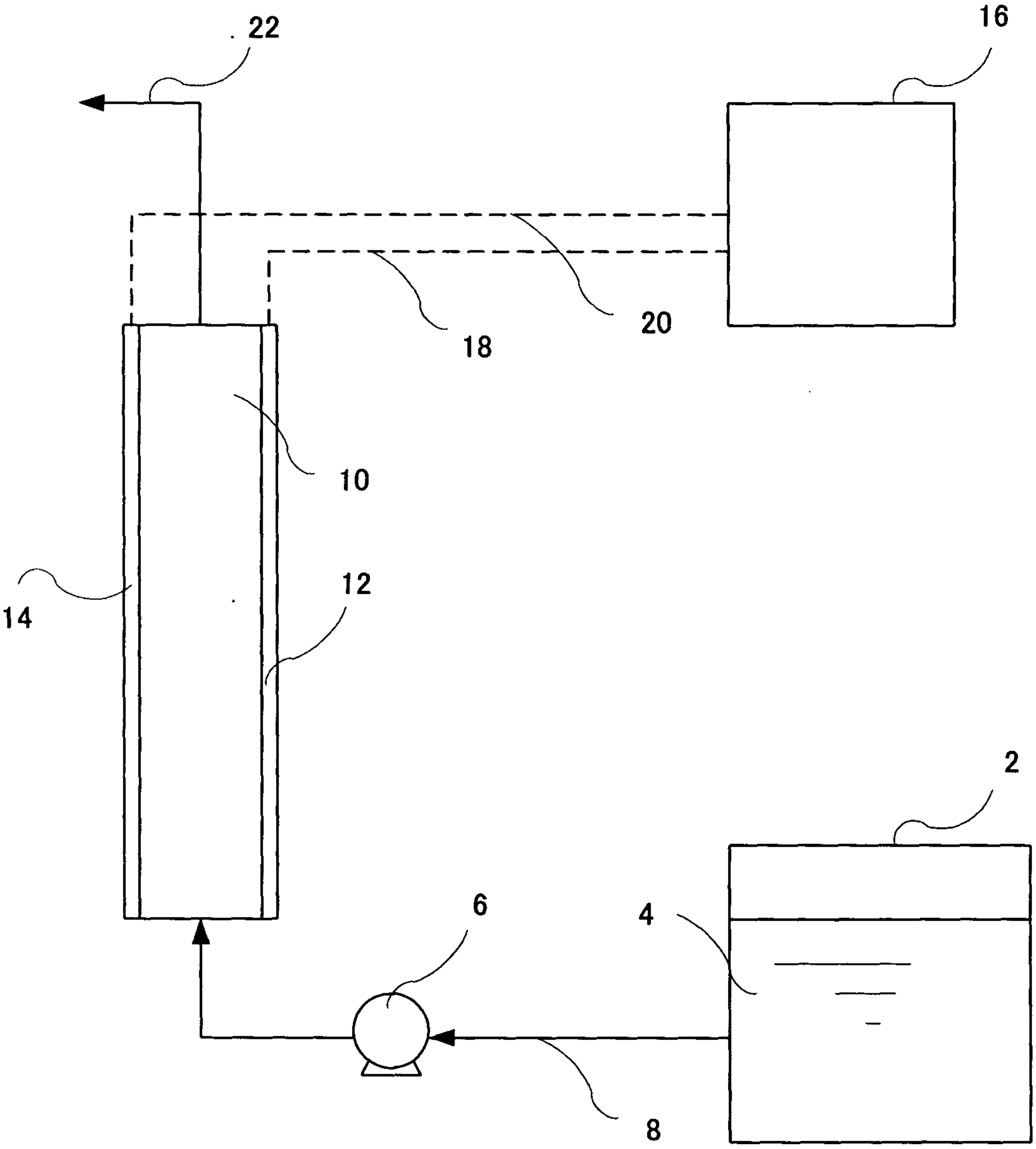

Fig. 2

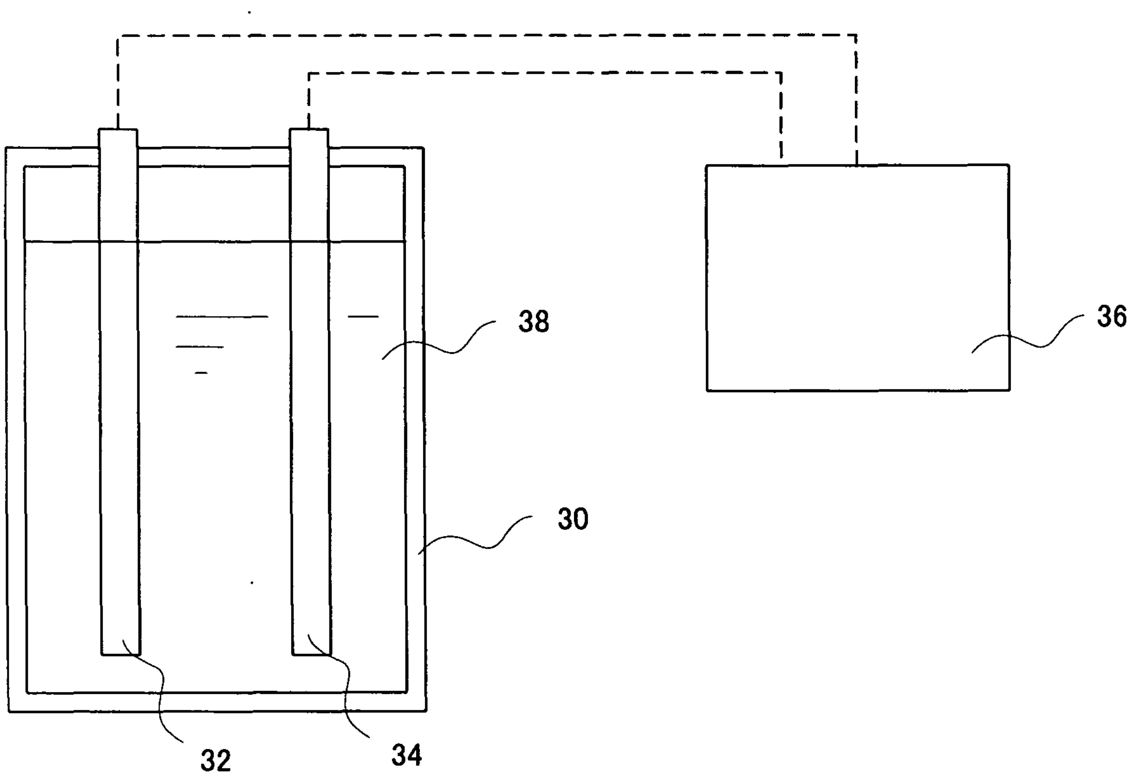

Fig. 3

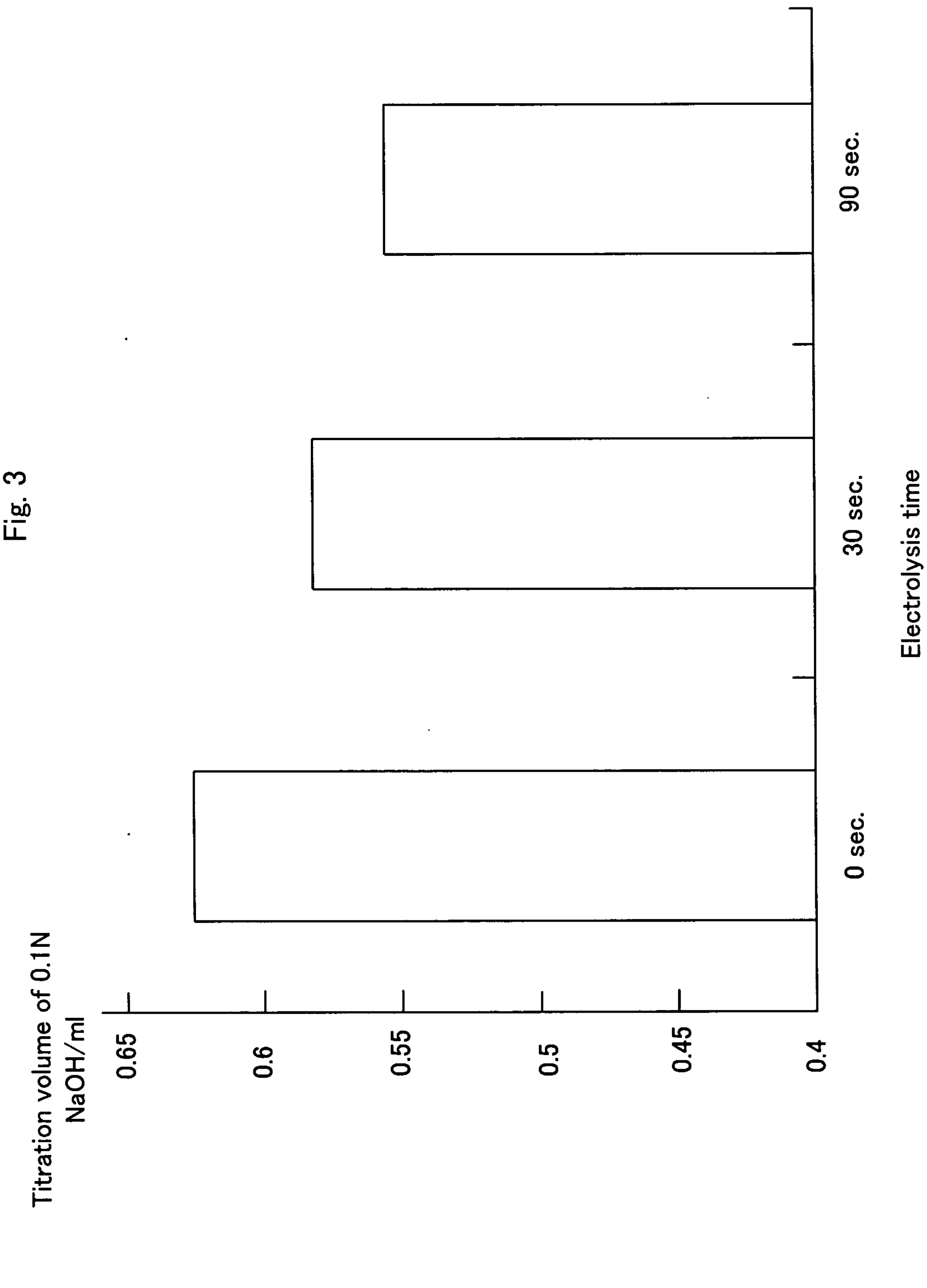
Titration volume of 0.1N NaOH/ml
0.65
0.6
0.55
0.5
0.45
0.4
0 sec.
30 sec.
90 sec.
Electrolysis time

Fig. 4

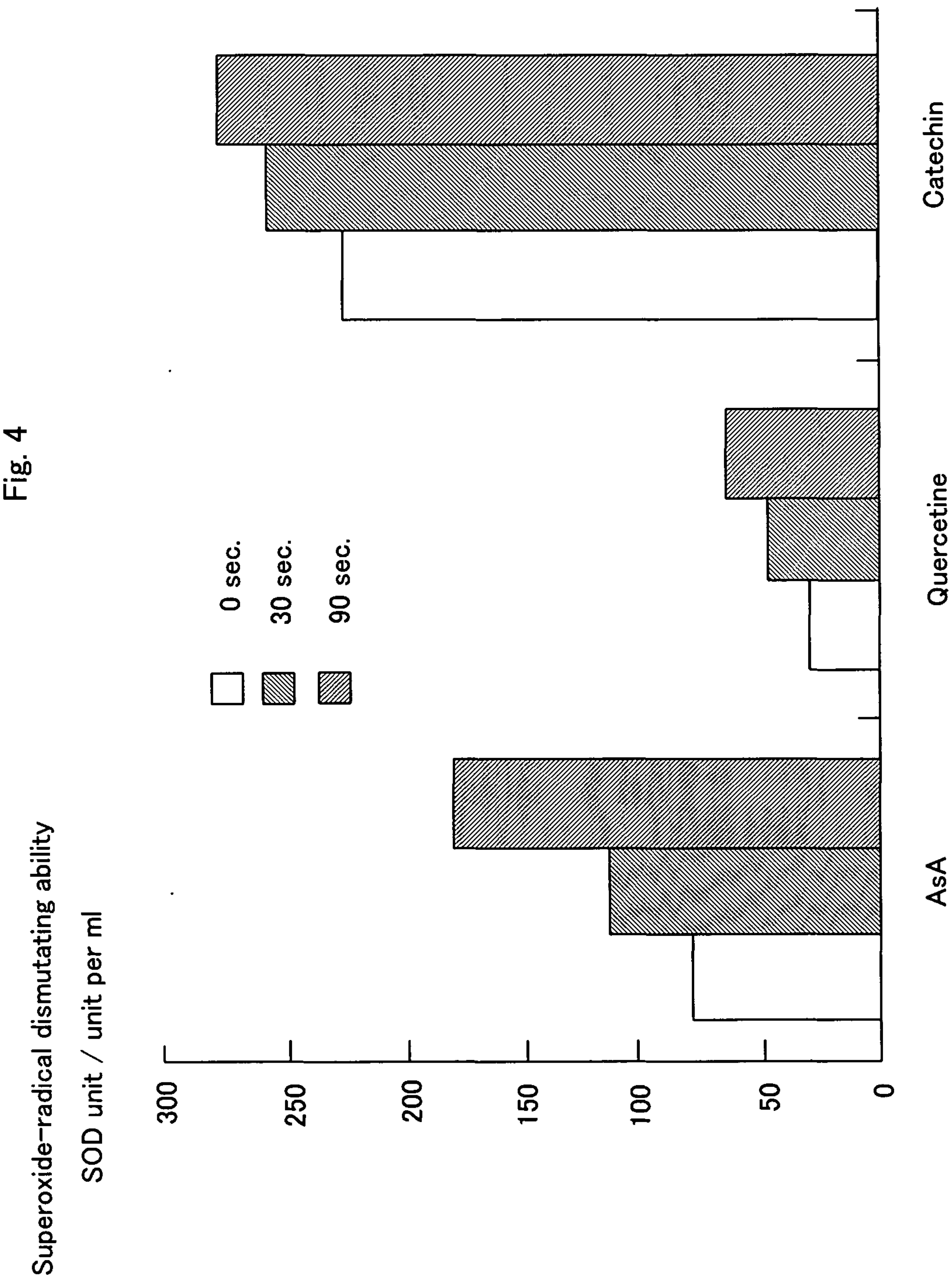
Superoxide-radical dismutating ability
SOD unit / unit per ml
300
250
200
150
100
50
0
0 sec.
30 sec.
90 sec.
AsA
Quercetine
Catechin

## INTERNATIONAL SEARCH REPORT

International application No.
PCT/JP2004/002083

A. CLASSIFICATION OF SUBJECT MATTER
Int.Cl$^7$ C02F1/461, 1/467

According to International Patent Classification (IPC) or to both national classification and IPC

B. FIELDS SEARCHED

Minimum documentation searched (classification system followed by classification symbols)
Int.Cl$^7$ C02F1/461, 1/467

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| A | JP 2001-347269 A (Mikuni Corp.), 18 December, 2001 (18.12.01), Full text & EP 1162176 A1 & US 2002-27079 A1 & US 6551492 B2 | 1-3 |
| A | JP 11-60429 A (Matsushita Electric Works, Ltd.), 02 March, 1999 (02.03.99), Column 1, lines 1 to 27; column 4, lines 18 to 30; column 6, lines 30 to 40 (Family: none) | 1-3 |

☐ Further documents are listed in the continuation of Box C.
☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 April, 2004 (15.04.04) | 11 May, 2004 (11.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)